# EUROPÄISCHE PATENTANMELDUNG

(11) **EP 4 491 369 A1**
(43) Veröffentlichungstag der Anmeldung: **15.01.2025**
(21) Anmeldenummer: 24180927.6
(22) Anmeldetag: 07.06.2024
(51) Int. Cl.: B29C 49/42, B29C 49/78, B29C 49/06, B29C 49/12, B29C 49/36, B29K 67/00, B29L 31/00

(54) **VORRICHTUNG UND VERFAHREN ZUM UMFORMEN VON KUNSTSTOFFVORFORMLINGEN ZU KUNSTSTOFFBEHÄLTNISSEN MIT VERSCHLEISSÜBERPRÜFUNG VON VENTILEN**

(30) Priorität: 11.07.2023 DE 102023118339
(71) Anmelder: Krones AG, 93073 Neutraubling (DE)
(72) Erfinder: Winzinger, Frank, 93073 Neutraubling (DE); Peter, Daniel, 93073 Neutraubling (DE); Senn, Konrad, 93073 Neutraubling (DE)
(74) Vertreter: Bittner, Bernhard

(57) **Zusammenfassung**

Vorrichtung (100) zum Umformen von Kunststoffvorformligen (V) zu Kunststoffbehältnissen (F) mit einem beweglichen Träger (22), an dem eine Vielzahl von Umformungsstationen (24) zum Umformen der Kunststoffvorformlinge (V) zu den Kunststoffbehältnissen (F) angeordnet ist, wobei diese Umformungsstationen (24) jeweils Ventilanordnungen (80) aufweisen, um die Kunststoffvorformlinge (V) zu deren Expansion mit einen fließfähigen und insbesondere gasförmigen Medium zu beaufschlagen und wobei jede dieser Ventilanordnungen (80) wenigstens zwei steuerbare Ventileinrichtungen (60) aufweist, wobei diese Ventileinrichtungen (60) bewegliche Kolbeneinrichtungen (75) aufweisen, welche die Ventileinrichtungen (60) zwischen wenigstens zwei Ventilstellungen schalten können, dadurch gekennzeichnet, dass die Vorrichtung eine Überwachungseinrichtung zur Überprüfung eines Verschleißzustandes wenigstens einer der Ventileinrichtungen aufweist, wobei diese Überwachungseinrichtung wenigstens eine Erfassungseinrichtung (64) aufweist, welche dazu geeignet und bestimmt ist, den Verschleißzustand der Ventileinrichtung (60) optisch und berührungslos zu erfassen.

## Beschreibung

Die vorliegende Erfindung bezieht sich auf eine Vorrichtung und ein Verfahren zum Umformen von Kunststoffvorformlingen zu Kunststoffbehältnissen und auf eine Ventileinrichtung. Die vorliegende Erfindung wird unter Bezugnahme auf eine Ventileinrichtung zum Steuern von Blasluft beschrieben, welche zum Expandieren der Kunststoffvorformlinge dient.

Es wird jedoch darauf hingewiesen, dass die vorliegende Erfindung auch für andere Ventileinrichtungen und insbesondere Ventile für Luft anwendbar ist. Daneben ist die Erfindung auch für andere Ventilgattungen einsetzbar, welche für andere fließfähige Medien, wie etwa Wasser, Öl, Dampf und dergleichen dienen.

Derartige Maschinen sind beispielsweise in Form von Blasformmaschinen aus dem Stand der Technik seit langem bekannt. Diese Blasformmaschinen weisen üblicherweise Ventilanordnungen auf, welche die zu expandierenden Kunststoffvorformlinge mit unterschiedlichen Drücken beaufschlagen. Zu diesem Zweck weisen diese Ventilanordnungen jeweils eine Vielzahl von Ventileinrichtungen auf.

In vielen Maschinen sind derartige Ventileinrichtungen an schwer zugänglichen Bereichen der Maschine verbaut. Weiterhin bestehen im Stand der Technik kaum Möglichkeiten, einen Verschleißzustand dieser Ventile zu kontrollieren. In der noch unveröffentlichten Patentanmeldung DE 10 2022 105 440 A1 der vorliegenden Anmelderin wurde eine Vorrichtung und ein Verfahren zur Verschleißüberprüfung von derartigen Ventilen angegeben. Dieses beruht auf einer elektrischen Überprüfung des Verschleißzustandes.

Der vorliegenden Erfindung liegt die Aufgabe zugrunde, eine Möglichkeit zu schaffen, einen Verschleißzustand von solchen Ventilen, insbesondere einer Vorrichtung zum Umformen von Kunststoffvorformlingen zu Kunststoffbehältnissen und insbesondere Kunststoffflaschen zu schaffen.

Diese Aufgabe wird erfindungsgemäß durch Vorrichtungen und Verfahren nach den unabhängigen Patentansprüchen erreicht. Vorteilhafte Ausführungsformen und Weiterbildungen sind Gegenstand der Unteransprüche.

Eine erfindungsgemäße Vorrichtung zum Umformen von Kunststoffvorformligen zu Kunststoffbehältnissen weist einen vorzugsweise beweglichen Träger auf, an dem eine Vielzahl von Umformungsstationen zum Umformen der Kunststoffvorformlinge zu den Kunststoffbehältnissen angeordnet ist, wobei diese Umformungsstationen jeweils Ventilanordnungen aufweisen, um die Kunststoffvorformlinge zu deren Expansion mit einen fließfähigen und insbesondere gasförmigen Medium zu beaufschlagen und wobei jede dieser Ventilanordnungen wenigstens zwei steuerbare Ventileinrichtungen aufweist, wobei diese Ventileinrichtungen bewegliche Kolbeneinrichtungen haben, welche die Ventileinrichtungen zwischen wenigstens zwei Ventilstellungen schalten können bzw. dazu geeignet und bestimmt sind, die Ventileinrichtungen zwischen wenigstens zwei Ventilstellungen zu schalten.

Erfindungsgemäß weist die Vorrichtung eine Überwachungseinrichtung zur Überprüfung eines Verschleißzustandes wenigstens einer der Ventileinrichtungen auf, wobei diese Überwachungseinrichtung wenigstens eine Erfassungseinrichtung aufweist, welche dazu geeignet und bestimmt ist, den Verschleißzustand der Ventileinrichtung mittels elektromagnetischer Strahlung und/oder akustisch und berührungslos zu erfassen.

Bevorzugt wird der Verschleißzustand optisch erfasst, insbesondere mittels Licht. Es wäre jedoch auch eine akustische Fassung, beispielsweise mittels Schallwellen und insbesondere mittels Ultraschall denkbar. Daneben könnten auch etwa Röntgenstrahlen eingesetzt werden. Die Anmelderin behält sich vor Schutz auch für eine akustische Erfassung, des Verschleißzustandes, insbesondere mittels Schallwellen und insbesondere mittels Ultraschall zu beanspruchen.

Besonders bevorzugt handelt es sich bei dem beweglichen Träger um einen drehbaren Träger. An diesem Träger sind bevorzugt die einzelnen Umformungsstationen, insbesondere äquidistant angeordnet.

Bevorzugt weisen die Umformungsstationen jeweils Blasformen auf, innerhalb derer die Kunststoffvorformlinge zu den Kunststoffbehältnissen expandierbar sind.

Daneben weisen bevorzugt die Umformungsstationen jeweils Reckstangen auf, welche in die Kunststoffvorformlinge einführbar sind, um diese in deren Längsrichtung zu dehnen.

Die einzelnen Blasformen können bevorzugt geöffnet und geschlossen werden, um Kunststoffvorformlinge in diese einzubringen und um sie anschließend mit einem fließfähigen Medium und insbesondere mit Druckluft zu beaufschlagen. Bei dem fließfähigen Medium handelt es sich daher insbesondere um (Druck)-luft, es wäre jedoch auch denkbar, dass die Kunststoffvorformlinge mit einer Flüssigkeit beaufschlagt werden.

Bei einer weiteren bevorzugten Ausführungsform weist die Vorrichtung wenigstens ein Druckreservoir auf, innerhalb dessen das fließfähige Medium unter einem vorgegebenen Druck speicherbar ist. Bevorzugt weist die Vorrichtung wenigstens zwei, bevorzugt wenigstens 3 und bevorzugt wenigstens 4 Druckreservoirs für unterschiedliche Druckstufen auf. Bevorzugt sind diese Druckreservoirs an dem drehbaren Träger angeordnet, an dem auch die Umformungsstationen angeordnet sind. Bei einer weiteren bevorzugten Ausführungsform handelt es sich bei den Druckreservoirs um Ringkanäle.

Bevorzugt sind diese Druckreservoirs mit den Ventilanordnungen der einzelnen Umformungsstationen in Strömungsverbindung bringbar. Auf diese Weise ist es möglich, dass die einzelnen Umformungsstationen durch die Ventilanordnungen ausgehend von den einzelnen Druckreservoirs mit unterschiedlichen Drücken beaufschlagt werden.

Bevorzugt weisen die einzelnen Umformungsstationen jeweils Beaufschlagungseinrichtungen auf, um die Kunststoffvorformlinge mit den einzelnen Drücken zu beaufschlagen. Diese Beaufschlagungseinrichtungen sind dabei bevorzugt in einer Längsrichtung der Kunststoffvorformlinge bewegbar und auf die Mündungen der Kunststoffvorformlinge zustellbar. Daneben ist es auch denkbar, dass die Beaufschlagungseinrichtung auf einen Tragring der Kunststoffvorformlinge oder eine Blasform, innerhalb derer sich der Kunststoffvorformling befindet, zugestellt wird.

Bei einer weiteren bevorzugten Ausführungsform ist die Erfassungseinrichtung dazu geeignet und bestimmt, ein ortsaufgelöstes Bild wenigstens eines Bestandteils einer Ventileinrichtung aufzunehmen. So kann es sich bei der Erfassungseinrichtung beispielsweise um eine Kamera oder eine andere Bildaufnahmeeinrichtung handeln.

Bevorzugt handelt es sich bei dem Bestandteil der Vorrichtung um die oben erwähnte Kolbeneinrichtung und insbesondere einen Endabschnitt dieser Kolbeneinrichtung. Es kann sich bei dem Bestandteil jedoch auch um einen Ventilsitz handeln, gegenüber dem sich die Kolbeneinrichtung in einer Stellung der Ventileinrichtung abstützt oder an welchem die Kolbeneinrichtung zeitweise anliegt. Bevorzugt ist die Kolbeneinrichtung bzw. ein Endabschnitt derselben aus einem weicheren Material ausgebildet als der Ventilsitz. Bevorzugt wird ein Verschleiß derjenigen Komponente überprüft, die aus einem weicheren Material hergestellt ist.

Bevorzugt weist die Vorrichtung eine Auswerteeinrichtung auf, welche wenigstens ein von der Erfassungseinrichtung aufgenommenes Bild der Ventileinrichtung auswertet. Durch diese Auswertung kann bevorzugt ein Verschleißzustand der Ventileinrichtung und insbesondere des Ventilkolbens ermittelt werden.

Bei einer bevorzugten Ausführungsform handelt es sich bei der Ventileinrichtung um ein pneumatisch oder elektrisch betätigtes Ventil oder um ein Magnetventil bzw. ein magnetisch betätigtes Ventil. Bei einer bevorzugten Ausführungsform weist die Ventileinrichtung ein Steuerventil bzw, ein Pilotventil auf. Bei diesem Steuerventil handelt es sich bevorzugt um ein elektrisch betätigtes oder um ein pneumatisch betätigtes Ventil.

Bei einer bevorzugten Ausführungsform ist die Erfassungseinrichtung dazu geeignet und bestimmt, einen Zustand der Ventileinrichtung in einem vorgegebenen Zustand der Ventileinrichtung zu erfassen, beispielsweise in einem geöffneten oder geschlossenen Zustand der Ventileinrichtung. Dabei ist es sowohl möglich, den Verschleißzustand in einem laufenden Betrieb und/oder online zu überwachen. Es ist jedoch auch möglich, dass der Verschleißzustand in einem Wartungsbetrieb der Vorrichtung oder in Reaktion auf eine Fehlermeldung überwacht wird.

Bei einer weiteren bevorzugten Ausführungsform weist wenigstens eine Ventileinrichtung ein Gehäuse auf, innerhalb dessen die Kolbeneinrichtung beweglich ist und die Erfassungseinrichtung ist dazu geeignet und bestimmt, den Verschleißzustand der Ventileinrichtung durch eine Wandung dieses Gehäuses hindurch zu erfassen oder die Erfassungseinrichtung ist in dieses Gehäuse und insbesondere in eine Wandung dieses Gehäuses integriert.

In der einen Ausgestaltung ist die Erfassungseinrichtung außerhalb des Gehäuses angeordnet und kann durch einen Bestandteil der Gehäusewandung hindurch den Verschleißzustand der Kolbeneinrichtung und/oder eines Ventilsitzes erfassen. Dazu kann die Erfassungseinrichtung bevorzugt wenigstens ein Bild dieser Kolbeneinrichtung und/oder des Ventilsitzes aufnehmen.

Es wäre jedoch auch möglich, dass die Erfassungseinrichtung direkt in das Gehäuse, insbesondere in eine Wandung des Gehäuses integriert ist. So kann beispielsweise ein Beobachtungsfenster der Erfassungseinrichtung auch einen Abschnitt einer Innenwandung der Ventileinrichtung ausbilden.

Bevorzugt ist jedoch die Ventileinrichtung von dem Gehäuse demontierbar und/oder an dieses montierbar. Falls die Erfassungseinrichtung in das Gehäuse integriert ist, ist sie bevorzugt in einem Bereich des Gehäuses integriert, in dem keine Dichtungseinrichtungen (etwa O-Ringe und dergleichen) oder Führungseinrichtungen zur Führung des Ventilkolbens vorhanden sind, welche die Kolbeneinrichtung gegenüber dem Gehäuse abdichten

Bei einer weiteren vorteilhaften Ausführungsform weist das Gehäuse wenigstens einen für Licht, insbesondere für sichtbares Licht transparenten Wandungsabschnitt auf und bevorzugt ist die Erfassungseinrichtung dazu geeignet und bestimmt, den Verschleißzustand der Ventileinrichtung durch diesen transparenten Wandungsabschnitt zu beobachten. In dieser Ausgestaltung ist es auch möglich, dass anstelle der Erfassungseinrichtung oder zusätzlich zu der Erfassungseinrichtung ein Maschinenbediener dessen Verschleißzustand überprüft.

Auf diese Weise kann die Erfassungseinrichtung bevorzugt durch diesen Wandungsabschnitt hindurch ein Bild der Kolbeneinrichtung und/oder des Ventilsitzes aufnehmen. Es wäre jedoch auch denkbar, dass das gesamte Gehäuse der Ventileinrichtung aus einem (insbesondere für sichtbares Licht) transparenten Material ausgebildet ist. Bevorzugt handelt es sich jedoch bei dem Material um ein Material, welches resistent gegenüber Reinigungsmitteln und/oder Sterilisationsmitteln ist.

So kann der besagte Wandungsabschnitt oder auch das Gehäuse beispielsweise aus Glas oder aus Kunststoff, beispielsweise PET bestehen.

Bevorzugt ist das Gehäuse wenigstens in demjenigen Bereich, in dem sich dieser Wandabschnitt befindet, geschlossen.

Bei einer bevorzugten Ausführungsform ist die Erfassungseinrichtung derart angeordnet und/oder positioniert, dass sie wenigstens einen Abschnitt und insbesondere einen Endabschnitt der Kolbeneinrichtung vollumfänglich beobachten kann. Auf diese Weise kann ein Verschleißzustand der Kolbeneinrichtung vollumfänglich festgestellt werden.

Bei einer bevorzugten Ausführungsform ist die Erfassungseinrichtung derart angeordnet und/oder positioniert, dass sie wenigstens einen Abschnitt eines Ventilsitzes vollumfänglich beobachten kann. Auf diese Weise kann ein Verschleißzustand des Ventilsitzes vollumfänglich festgestellt werden

Bei einer weiteren bevorzugten Ausführungsform weist die Vorrichtung eine Steuerungseinrichtung auf, welche dazu geeignet und bestimmt ist, die Vorrichtung auf Basis wenigstens eines von der Erfassungseinrichtung ausgegebenen Wertes zu steuern und/oder zu regeln und/oder die Vorrichtung weist wenigstens eine Prozessoreinrichtung auf, welche dazu geeignet und bestimmt ist, wenigstens einen von der Erfassungseinrichtung ausgegebenen Wert auszuwerten und ein Signal auszugeben welches für einen Verschleißzustand der Ventileinrichtung charakteristisch ist.

Bei einer bevorzugten Ausführungsform weist die Vorrichtung und insbesondere die Steuerungseinrichtung eine Speichereinrichtung auf, in der Bilder von Ventilteilen und insbesondere von Kolbeneinrichtungen und/oder Ventilsitzen abgespeichert sind.

Besonders bevorzugt weist die Vorrichtung eine Vergleichseinrichtung auf, welche dazu geeignet und bestimmt ist, von der Kolbeneinrichtung und oder einem Ventilsitz aufgenommene Bilder mit abgespeicherten Bildern zu vergleichen, insbesondere um so eine Information ausgeben zu können, welche für den Verschleißzustand der Ventileinrichtung charakteristisch ist.

So kann beispielsweise ein Hinweis über einen bevorstehenden Ausfall der Ventileinrichtung ausgegeben werden. Auch kann an den Benutzer eine Information über eine noch zu erwartende Restlebenszeit der Ventileinrichtung ausgegeben werden.

Bevorzugt wird das oder werden die ortsaufgelösten Bilder in einer Speichereinrichtung gespeichert. Bei dieser Speichereinrichtung handelt es sich bevorzugt um eine Cloud. Dabei werden bevorzugt in dieser Speichereinrichtung, und insbesondere einer Cloud auch Bilder anderer Maschinen abgelegt werden, wobei es sich bei diesen anderen Maschinen bevorzugt um baugleiche Maschinen oder um Maschinen mit baugleichen Ventilen handelt.

Bei einer weiteren bevorzugten Ausführungsform kann auch ein Signal ausgegeben werden, wenn bereits ein Verschleiß vorliegt, das Ventil aber noch funktionsfähig ist. Somit kann der Bediener vor einem Stillstand der Maschine ein auszutauschendes Teil bestellen. Optional kann das Teil auch automatisch bestellt werden.

Es wäre auch denkbar, dass ein derartiges Signal an ein mobiles Endgerät geschickt wird.

Bei einer weiteren bevorzugten Ausführungsform ist die Erfassungseinrichtung stationär gegenüber der Ventileinrichtung angeordnet. So kann beispielsweise die Erfassungseinrichtung in einer festen Position angeordnet sein, in der sie stets dazu geeignet ist, den Zustand der Kolbeneinrichtung und/oder des Ventilsitzes zu erfassen und/oder in der sie stets ein Bild der Ventileinrichtung aufnehmen kann.

Bei einer weiteren bevorzugten Ausführungsform ist die Erfassungseinrichtung beweglich gegenüber der Ventileinrichtung angeordnet ist.

Bevorzugt ist die Erfassungseinrichtung derart beweglich angeordnet, dass sie die Verschleißzustände mehrerer Ventileinrichtungen überwachen kann. Auf diese Weise ist es möglich, dass mehrere Ventile mittels einer Erfassungseinrichtung erfasst werden können.

Bei einer bevorzugten Ausführungsform ist die Erfassungseinrichtung dazu geeignet und bestimmt, wenigstens eine Information und/oder Identifikation zu erfassen, welche für eine Umformungsstation, der die Ventileinrichtungen zugeordnet sind, charakteristisch ist. Hierbei kann es sich etwa um eine Stationsnummer dieser Umformungsstation handeln oder auch um eine individuelle Markierung, welche an der Umformungsstation angeordnet ist, wie etwa ein QR Code oder dergleichen. Auf diese Weise können für eine bestimmte Ventileinrichtung ermittelte Werte auch einer bestimmten Umformungsstation zugeordnet werden. So kann später nachvollzogen werden, bei welcher Umformungsstation ein Verschleiß vorliegt.

Bei einer weiteren bevorzugten Ausführungsform ist die Erfassungseinrichtung auf einem Roboterarm führbar. So können beispielsweise in einem Wartungsbetrieb mehrere Ventileinrichtungen überwacht werden.

Die Erfassungseinrichtung kann auf einem mobilen Roboter angeordnet sein. Der mobile Roboter kann mehrere Räder oder Beine aufweisen, mit denen er sich fortbewegen kann. Alternativ kann es sich bei dem mobilen Roboter um eine Drohne handeln, welche die oder eine Erfassungseinrichtung transportiert. Der mobile Roboter kann nicht nur die Ventile einer Ventileinrichtung, sondern von einer Vielzahl von Ventileinrichtungen überprüfen bzw. sensorisch erfassen.

Die Ventileinrichtungen können auf einem beweglichen Träger, z.B. einem Blasrad, entlang dessen Umfang angeordnet sein. Durch Drehung des Blasrades können die einzelnen Ventileinrichtungen oder Ventile einer oder der Erfassungseinrichtung nacheinander präsentiert werden.

Mittels eines mobilen Roboters kann eine oder die Erfassungseinrichtung alternativ entlang des Umfangs eines Blasrades bewegt werden, um eine Vielzahl von Ventileinrichtungen zu überprüfen.

Ein mobiler Roboter mit einer oder der Erfassungseinrichtung kann eine Vielzahl von Ventileinrichtungen von unterschiedlichen Vorrichtungen zum Umformen von Kunststoffvorformligen zu Kunststoffbehältnissen

Bei einer weiteren bevorzugt Ausführungsform ist die Erfassungseinrichtung dazu geeignet und bestimmt, die Verschleißzustände mehrerer Ventileinrichtungen zu überwachen. Dabei kann diese Erfassungseinrichtung auch stationär gegenüber den Ventileinrichtungen ausgeordnet sein. So kann beispielsweise eine Erfassungseinrichtung oberhalb mehrerer Ventileinrichtungen einer Ventilanordnung angeordnet sein und die Ventilkolben mehrerer Ventileinrichtungen erfassen.

Besonders bevorzugt ist die Ventilanordnung derart ausgebildet, dass ein stangenartiger Körper, insbesondere die oben erwähnte Reckstange durch diese Ventilanordnung führbar ist.

Wie oben erwähnt, kann der Verschleißzustand neben den optischen Methoden bevorzugt auch mit einer Erfassungseinrichtung erfolgen, welche dazu geeignet und bestimmt ist, diesen Zustand elektromagnetisch und/oder akustisch zu erfassen und insbesondere mittels elektromagnetischer Strahlung und/oder Akustik.

Im Rahmen einer elektromagnetischen Überprüfung des Verschleißzustandes weist die Erfassungseinrichtung bevorzugt induktive und/oder kapazitive Sensoren auf. Bevorzugt wird dabei eine induktive und/oder kapazitive Lageerkennung wenigstens eines Abschnitts und insbesondere eines Endabschnitts der Kolbeneinrichtung und/oder wenigstens eines Abschnitts eines Ventilsitzes vorgenommen. Es wird somit die Lage bzw. Position der Kolbeneinrichtung und/oder des Ventils erfasst.

Daneben kann die Überprüfung des Verschleißzustandes der Ventileinrichtung bevorzugt auch über eine Dichtigkeitsprüfung erfolgen, wobei dies beispielsweise über die Messung der Flugzeit des Ventils, d.h. dem Schaltzeitpunkt zwischen dem Verlassen der Startlage und dem Erreichen der Endlage. Aus dieser Flugzeit können Rückschlüsse über die ordnungsgemäße Funktion des Ventils gezogen werden.

Eine derartige Verschleißüberprüfung mit induktiven und/oder kapazitiven Sensoren kann dabei bevorzugt an einem elektrisch betriebenen Pilotventil und/oder an einem pneumatisch betriebenen Hauptventil vorgenommen werden.

Die Überprüfung bzw. Erfassung des Verschleißzustandes kann bevorzugt durch ein selbstlernendes System wie eine künstliche Intelligenz (KI) erfolgen, wobei bevorzugt ein Testlauf durchgeführt werden kann und die Kl auf bestimmte bzw. vorgegebene Muster eingelernt wird, welche einen Verschleißzustand und/oder einen Gutzustand der betreffenden Bauteile entsprechen. Dies kann auch über das sogenannte DoE (Design of Experiments) erfolgten.

Die Auswertung der von dem akustischen Sensor und/oder der Kl erfassten Daten erfolgt bevorzugt zentral an der Anlage oder dezentral an einem anderen Ort und wird in diesem Fall der Anlage oder einer Bedienperson übermittelt.

Wird bei der Auswertung festgestellt, dass ein Fehler vorliegt und/oder in näherer Zukunft ein bestimmter bzw. vorhersehbarer Fehler auftreten wird, kann bevorzugt eine Fehlermeldung ausgegeben werden. Bei der Fehlermeldung kann es sich bevorzugt um ein akustisches und/oder optisches Signal an den Bediener über ein Bedienterminal oder über Signalleuchten an der Anlage handeln. Bevorzugt kann zusammen mit der Fehlermeldung auch gleich eine Handlungsempfehlung ausgegeben werden, wie beispielsweise eine Empfehlung zum Bestellen von Ersatzteilen oder Austauschen bestimmter Teile.

Bevorzugt werden für den Verschleißzustand charakteristische Werte bzw. Grenzwerte vorgegeben und insbesondere Grenzwertbereiche, innerhalb denen die Messerergebnisse liegen sollen. Werden diese Werte unter- oder überschritten, so kann dies ein Indiz dafür sein, dass ein Verschleiß vorliegt. Bevorzugt kann dabei auch eine dynamische Grenzwertanpassung erfolgen, so dass die Grenzwerte je nach Anforderungen oder sich ändernden Umgebungsbedingungen, bevorzugt automatisiert, angepasst werden.

Diese induktiven und/oder kapazitiven Messungen können dabei bevorzugt auch außerhalb des optischen Spektrums, z.B. im IR-Bereich stattfinden. Beispielsweise sind über die Wärmeverteilung in oder am Ventilkolben zusätzliche Verschleißparameter erkennbar, welche Rückschlüsse auf einen bevorzugt zukünftigen Verschleiß geben können.

Denkbar wären auch Röntgenverfahren, mit denen je nach Gestaltung des Kolbens auch eine innere Struktur und insbesondere eine Materialstruktur des Kolbens überprüft werden kann. Bevorzugt könnte mit derartigen Röntgenverfahren eine Materialüberprüfung erfolgen, um beispielsweise Schwachstellen im Material insbesondere des Kolbens frühzeitig erkennen zu können.

Daneben kann die Erfassungseinrichtung bevorzugt auch akustische Sensoren zur Verschleißüberprüfung aufweisen. Bevorzugt wird dabei eine akustische Lageerkennung wenigstens eines Abschnitts und insbesondere eines Endabschnitts der Kolbeneinrichtung und/oder wenigstens eines Abschnitts eines Ventilsitzes vorgenommen. Es wird somit die Lage bzw. Position der Kolbeneinrichtung und/oder des Ventils erfasst. Dies erfolgt bevorzugt über das Messen bzw. Erfassen von Vibrationen und/oder Vibrationszeitpunkten beispielsweise des Anschlags des Kolbens oder über das Messen der Schleifgeräusche/Gleitgeräusch in dem Ventilsitz und dem Erkennen der Lage des Kolbens.

Bevorzugt kann mit den akustischen Sensoren auch eine Verschließüberprüfung über eine Schaltzeit der Ventileinrichtung erfolgen, wobei bevorzugt akustisch der Schaltzeitpunkt und der Anschlagzeitpunkt des Kolbens erfasst werden und die Zeit dazwischen gemessen wird.

Wie bei den induktiven und/oder kapazitiven Sensoren kann bevorzugt auch mit den akustischen Sensoren der Verschleißzustand über die Dichtigkeit ermittelt werden, wie beispielsweise durch das Erfassen von Leckagegeräuschen im eigentlich geschlossenen Zustand der Ventileinrichtung. Dazu können beispielsweise durch einen Benutzer oder automatisiert durch die Auswerteeinrichtung Frequenzbänder analysiert werden.

Bevorzugt ist der akustische Sensor mit einem Hochpass- und/oder Tiefpassfilter verbunden, welche unerwünschte Nebengeräusche ausblenden, welche ansonsten die akustische Überprüfung erschweren könnten. Beispielsweise könnten Strömungsgeräusche des Pilotventils und/oder des Hauptventils ausgeblendet werden oder, wie oben erwähnt, auch analysiert werden, um ungewöhnliche Geräusche zu detektieren.

Zur Überprüfung des Verschleißzustandes der Ventileinrichtung ist in einer bevorzugten Ausführungsform eine Membran an einer Außenseite des Ventilblocks oder im Innenraum des Blasluftkanals angeordnet, mittels welcher akustische Schwingungen, vergleichbar wie bei einem Mikrophon, aufgenommen werden können.

Bei einer weiteren bevorzugten Ausführungsform erfolgt die Überprüfung des Verschleißzustandes über akustische Methoden durch das Anordnen eines Tonabnehmers. Bevorzugt weist dabei jeder Ventilblock wenigstens einen Tonabnehmer auf und besonders bevorzugt weist jede Ventileinrichtung bzw. jedes Ventil wenigstens einen derartigen Tonabnehmer auf.

Wie oben bereits erwähnt, kann zur Erfassung und/oder Überprüfung des Verschleißzustandes der Ventileinrichtungen auch eine Software bzw. eine künstliche Intelligenz (Kl) eingesetzt werden.

Bevorzugt wird die Kl hierzu mit einer Vielzahl von Gutkolben und/oder Gutdichtungen und verschlissener Kolben und/oder Dichtungen eingelernt, um diese Zustände erkennen zu können. Dabei kann der KI bevorzugt auch eine Analyse der gemessenen bzw. erfassten Daten von einer Vielzahl von Stationen/Maschinen zur Verfügung gestellt werden und diese Ergebnisse bevorzugt zur Bewertung des Verschleißzustandes und/oder der Verschleißvorhersage verwendet werden. Bevorzugt werden hierzu und insbesondere zum Einlernen der KI eine Vielzahl von unterschiedlichen Messdaten, wie beispielsweise Bilder und akustische Messdaten verwendet.

Diese Daten können bevorzugt mit zusätzlichen (Mess)Daten überlagert werden, wie beispielsweise der Blasdruckkurve (insb. deren Steigung) und/oder die Anzahl Blaszyklen und/oder Daten betreffend die Flaschenqualität, beispielsweise Wanddickenmessung oder Materialverteilung.

Wenn notwendig oder möglich regelt die KI beispielsweise Pilotventile derart, dass diese den Kolben in schonender Weise ansteuern, beispielsweise durch geringeren Druckaufbau, so dass der Kolben nicht so schnell auf den Sitz prallt. Diese Regelung soll dabei aber die Flaschenqualität nicht verschlechtern. Parallel kann die KI bevorzugt auch die Reckgeschwindigkeit zu Schaltzeitpunkten der P1-Pilotventile anpassen.

Die Regelung bzw. Steuerung erfolgt demnach bevorzug derart durch die Kl, dass diese den optimalen Betriebspunkt zwischen der Flaschenqualität und der Ventilschaltzeiten ermittelt und diese entsprechend ansteuert. Dabei könnten bevorzugt auch die Ergebnisse der oben erwähnten Wärmeermittlung im Ventilkolben im beispielsweise IR-Bereich zur Ermittlung dieser Schaltzeiten verwendet werden.

Die beschriebenen elektromagnetischen und akustischen Methoden zur Überprüfung des Verschleißzustandes sind vorteilhaft, da hierdurch frühzeitig der Verschleiß von Ventilen erkannt werden kann.

Die vorliegende Erfindung ist weiterhin auf eine Ventileinrichtung, insbesondere für eine Vorrichtung der oben beschriebenen Art gerichtet, wobei diese Ventileinrichtungen einen Medieneingang für ein fließfähiges Medium und einen Medienausgang für das fließfähige Medium aufweist und eine linearbewegliche Kolbeneinrichtung, welche zwischen wenigstens zwei Stellungen der Ventileinrichtung beweglich ist, wobei in einer der beiden Stellungen ein Medienfluss des fließfähigen Mediums von dem Medieneingang zu dem Medienausgang ermöglicht ist und die der anderen der beiden Stellungen ein Medienfluss des fließfähigen Mediums von dem Medieneingang zu dem Medienausgang (im Wesentlichen) verhindert oder gedrosselt ist.

Dabei weist diese Ventileinrichtung ein Gehäuse auf, innerhalb dessen die Kolbeneinrichtung beweglich ist.

Erfindungsgemäß ist wenigstens ein Abschnitt der Kolbeneinrichtung und/oder eines Ventilsitzes mittels einer optischen Erfassungseinrichtung beobachtbar und insbesondere durch einen Bereich des Gehäuses hindurch beobachtbar ist.

Die vorliegende Erfindung ist weiterhin auf eine Überwachungsvorrichtung zur Überwachung eines Verschleißzustandes einer Ventileinrichtung gerichtet. Diese weist eine Ventileinrichtung der oben beschriebenen Art auf und eine Erfassungseinrichtung, welche dazu geeignet und bestimmt ist, wenigstens einen Verschleißzustand der Kolbeneinrichtung und/oder des Ventilsitzes zu erfassen.

Bevorzugt ist die Erfassungseinrichtung dazu geeignet und bestimmt ist, ein ortsaufgelöstes Bild der Kolbeneinrichtung und/oder des Ventilsitzes aufzunehmen.

Bei einer weiteren bevorzugten Ausführungsform weist die Überwachungsvorrichtung eine Auswerteeinrichtung auf, um aus einem aufgenommenen Bild der Kolbeneinrichtung und/oder des Ventilsitzes auf einen Verschleißzustand der Ventileinrichtung zu schließen.

Die vorliegende Erfindung ist weiterhin auf ein Verfahren zum Umformen von Kunststoffvorformligen zu Kunststoffbehältnissen gerichtet, wobei ein beweglicher und insbesondere drehbarer Träger, an dem eine Vielzahl von Umformungsstationen zum Umformen der Kunststoffvorformlinge zu den Kunststoffbehältnissen angeordnet ist, diese Kunststoffvorformlinge transportiert, wobei diese Umformungsstationen jeweils Ventilanordnungen mittels derer die Kunststoffvorformlinge (10) zu deren Expansion mit einem fließfähigen und insbesondere gasförmigen Medium beaufschlagt werden und wobei jede dieser Ventilanordnungen (80) wenigstens zwei steuerbare Ventileinrichtungen (60) aufweist, wobei diese Ventileinrichtungen bewegliche Kolbeneinrichtungen haben, welche die Ventileinrichtungen zwischen wenigstens zwei Ventilstellungen schalten.

Erfindungsgemäß ist eine Überwachungseinrichtung zur Überprüfung eines Verschleißzustandes wenigstens einer der Ventileinrichtungen vorgesehen, wobei diese Überwachungseinrichtung wenigstens eine Erfassungseinrichtung aufweist, welche wenigstens ein Element der Ventileinrichtung optisch erfasst, um den Verschleißzustand der Ventileinrichtung optisch und berührungslos zu erfassen und/oder zu ermitteln.

Besonders bevorzugt nimmt diese Erfassungseinrichtung wenigstens ein ortsaufgelöstes Bild der Ventileinrichtung und insbesondere der Kolbeneinrichtung und/oder eines Ventilsitzes (für diese Kolbeneinrichtung) auf. Bevorzugt wertet eine Auswerteeinrichtung dieses ortsaufgelöste Bild auf, um auf diese Weise einen Verschleißzustand der Ventileinrichtung zu ermitteln.

Die Erfindung ist weiterhin gerichtet auf ein Verfahren zum Überwachen, insbesondere eines Verschleißzustandes, einer Ventileinrichtung einer Umformungsstation mit den folgenden Schritten:
- Schalten der Ventileinrichtung zur Freigabe eines unter Druck stehenden Mediums und insbesondere eines gasförmigen Mediums
- Umformen von Kunststoffvorformlingen zu Kunststoffbehältnissen unter Zuhilfenahme des Mediums
- Erfassen eines Bereichs der Ventileinrichtung mit einer Erfassungseinrichtung
- Aufnehmen und Speichern von Bilddaten mit der Erfassungseinrichtung
- Generieren eines digitalen Bildes
- Analysieren des Bildes oder der Bilddaten mit einer Auswerteeinrichtung
- optional Einleiten von Maßnahmen bei der Feststellung eines Fehlers

Bei der Erfassungseinrichtung handelt es sich bevorzugt um eine Digitalkamera.

Weiterhin können die oben genannten vorteilhaften Ausführungsformen und Verfahren auch für dieses Verfahren Anwendung finden. So kann beispielsweise die Auswertung mittels einer künstlichen Intelligenz erfolgen, wie oben ausgeführt.

Bevorzugt handelt es sich bei dem Bereich der Ventileinrichtung um einen Ventilkolben und/oder einen Abschnitt und insbesondere einen Endabschnitt dieses Ventilkolbens.

Bevorzugt kann das unter Druck stehende Medium in einen zu expandierenden Kunststoffvorformling eingeleitet werden.

Weitere Vorteile und Ausführungsformen ergebe sich aus den beigefügten Zeichnungen: Darin zeigen:
- Fig. 1: eine erste Ausführungsform einer erfindungsgemäßen Ventileinrichtung;
- Fig. 2: eine Verschleißsituation der in Fig. 1 gezeigten Ventileinrichtung;
- Fig. 3: eine zweite Ausführungsform einer erfindungsgemäßen Ventileinrichtung;
- Fig. 4: eine vierte Ausführungsform einer erfindungsgemäßen Ventileinrichtung;
- Fig. 5: eine fünfte Ausführungsform einer erfindungsgemäßen Ventileinrichtung;
- Fig. 6: eine sechste Ausführungsform einer erfindungsgemäßen Vorrichtung;
- Fig. 7: eine Ventilanordnung mit einer Vielzahl von Ventileinrichtungen; und
- Fig. 8: eine Darstellung einer erfindungsgemäßen Vorrichtung zum Umformen von Kunststoffvorformlingen zu Kunststoffbehältnissen.

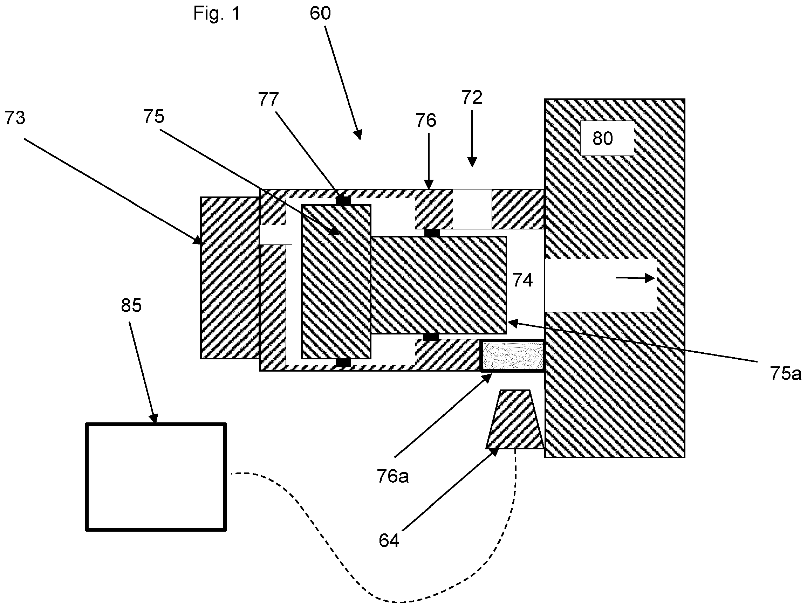

Fig. 1 zeigt eine Ventileinrichtung 60 in einer ersten Ausführungsform. Dabei bezieht sich das Bezugszeichen 75 auf einen Ventilkolben, der linearbeweglich zwischen zwei Endpositionen ist. Das Bezugszeichen 72 kennzeichnet einen Medieneingang, über welches der Ventileinrichtung Druckluft zugeführt werden kann. Das Bezugszeichen 74 kennzeichnet einen Medienausgang, über welchen in einem geöffneten Zustand der Ventileinrichtung, die an dem Medieneingang bzw. Druckeingang 72 anliegende Luft weitergeleitet werden kann, insbesondere zu einer Blasform.

Das Bezugszeichen 76 kennzeichnet ein Gehäuse der Ventileinrichtung 60, innerhalb dessen die Kolbeneinrichtung 75 beweglich ist. Das Bezugszeichen 77 kennzeichnet Führungseinrichtungen, um die Kolbeneinrichtung gegenüber dem Gehäuse zu führen.

Das Bezugszeichen 75a kennzeichnet Dichtflächen der Kolbeneinrichtung 75, die hier aus einem weicheren Material ausgeführt sind wie ein Ventilsitz für die Kolbeneinrichtung 75. Bei dieser Ausführungsform sind damit diese Dichtflächen 75a einem Verschleiß unterworfen. Fig. 1 zeigt eine Ventileinrichtung mit einem nicht verschlissenen Kolben in einem geöffneten Zustand.

Das Bezugszeichen 80 kennzeichnet die Ventilanordnung, welche die einzelnen Ventileinrichtungen trägt und das Bezugszeichen 73 kennzeichnet ein Vorsteuerventil. Dieses kann dabei beispielsweise als elektrisches oder pneumatisches Ventil ausgeführt sein.

Das Bezugszeichen 76a kennzeichnet einen transparenten Abschnitt der Gehäusewandung. Durch diesen Abschnitt hindurch kann eine Erfassungseinrichtung, wie eine Kamera in das Innere des Gehäuses 76 und insbesondere auf die Kolbeneinrichtung 75 und dort insbesondere auf deren Dichtfläche blicken.

Das Bezugszeichen 85 kennzeichnet in ihrer Gesamtheit eine Auswerteeinrichtung zur Auswertung der von der Erfassungseinrichtung 64 aufgenommenen Bilder.

Daneben kann auch eine Steuerungseinrichtung zum Steuern einer entsprechenden Vorrichtung, eine SPS, LMS, ein Internetanbindung, eine Cloud, eine Datenbank und/oder eine Vergleichseinrichtung vorgesehen sein.

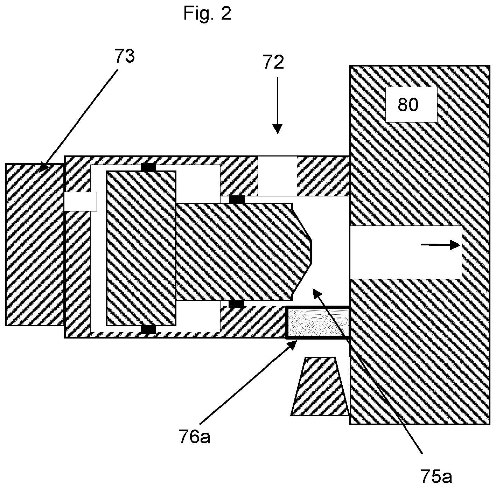

Fig. 2 zeigt eine weitere Situation der in Fig. 1 gezeigten Vorrichtung. Hier ist die Ventileinrichtung ebenfalls geöffnet, jedoch die Kolbeneinrichtung verschlissen, was ebenfalls von der Erfassungseinrichtung erfasst werden kann.

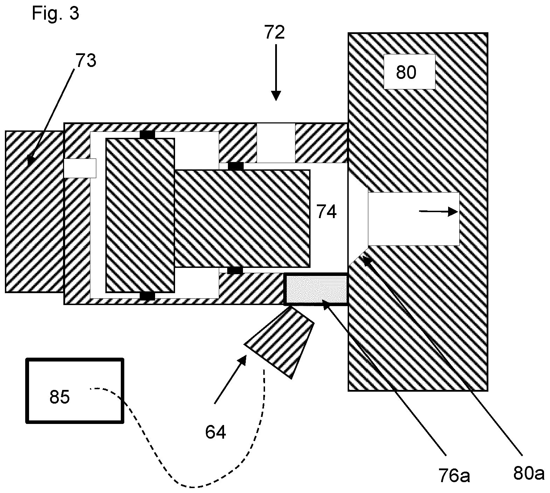

Fig. 3 zeigt eine weitere Ausgestaltung einer erfindungsgemäßen Ventileinrichtung. Bei dieser Ausgestaltung ist die Kolbeneinrichtung 75 aus einem vergleichsweise harten Material ausgeführt, dafür aber sind die Dichtflächen 80a bzw. ist der Ventilsitz aus einem weichen Material ausgeführt und damit dem Verschleiß unterworfen. Bei dieser Ausführungsform blickt die Erfassungseinrichtung 64 durch den transparenten Wandungsabschnitt auf die Dichtflächen 80a der Ventilanordnung. Entsprechend erfolgt hier bevorzugt eine Auswertung der von den Dichtflächen aufgenommenen Bilder.

Fig. 3 zeigt damit die Situation einer geöffneten Ventileinrichtung bei verschlissenen Dichtflächen 80a.

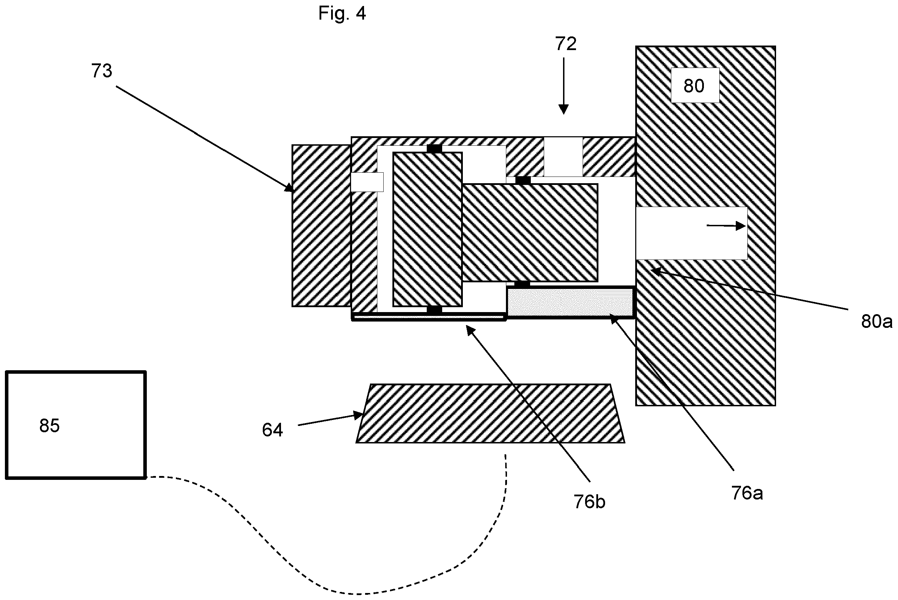

Fig. 4 zeigt eine weitere Ausführungsform einer erfindungsgemäßen Ausführungsform. Auch hier sind die Dichtflächen 85a die Verschleißflächen und werden entsprechend beobachtet bzw. erfasst. Zusätzlich können hier jedoch auch andere Bereiche der Kolbeneinrichtung 75 erfasst werden, wozu bevorzugt ein weiterer transparenter Gehäuseabschnitt 76b vorgesehen ist. Die Erfassungseinrichtung 64 kann hier bevorzugt einen größeren Blickbereich aufweisen oder es könnten auch zwei Erfassungseinrichtungen vorgesehen sein.

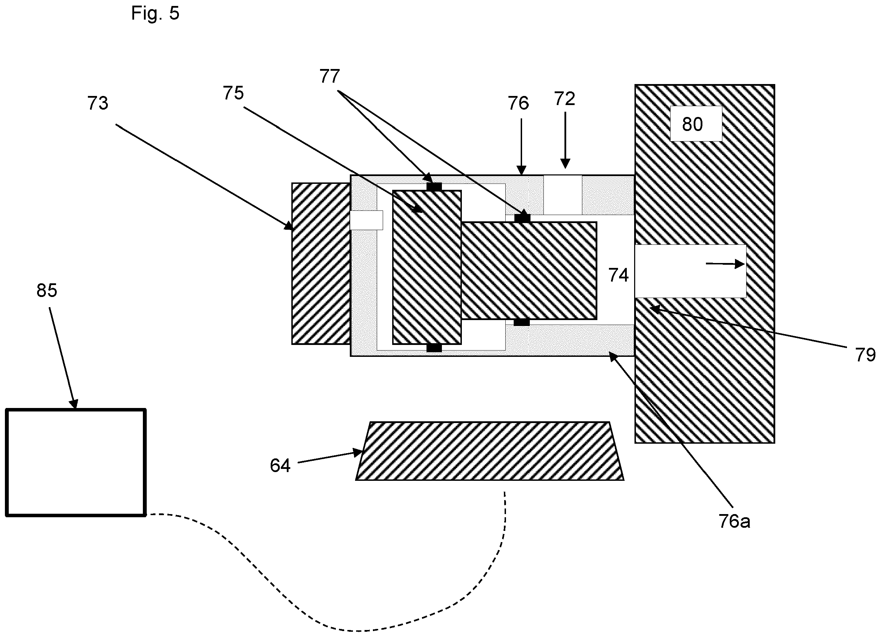

Fig. 5 zeigt eine weitere erfindungsgemäße Ausführungsform einer Ventileinrichtung. Bei dieser Ausgestaltung ist bevorzugt das gesamte Gehäuse 76 transparent ausgeführt, Bei dieser Seite kann die Ventileinrichtung bzw. deren Innenleben von mehreren Seiten erfasst werden. Auf diese Weise wäre es möglich, beispielsweise sowohl die Kolbeneinrichtung 75 als auch deren Führungen 77 zu überwachen. Daneben ist hier auch eine Überwachung des Ventilsitzes möglich.

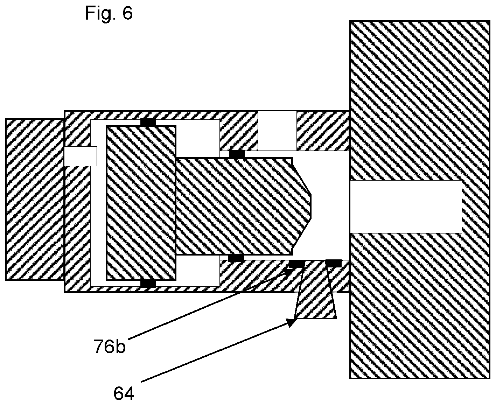

Fig. 6 zeigt eine weitere Ausführungsform der erfindungsgemäßen Vorrichtung. Bei dieser Ausgestaltung erfasst die Erfassungseinrichtung nicht "von außen her" die Kolbeneinrichtung und/oder den Innenraum des Gehäuses sondern ist in eine Ausnehmung eingesetzt. Auf diese Weise kann die Erfassungseinrichtung unmittelbar die Kolbeneinrichtung und/oder den Ventilsitz beobachten. Damit ist bei dieser Ausgestaltung die Erfassungseinrichtung, beispielsweise eine Kamera ein Bestandteil des Gehäuses der Ventileinrichtung.

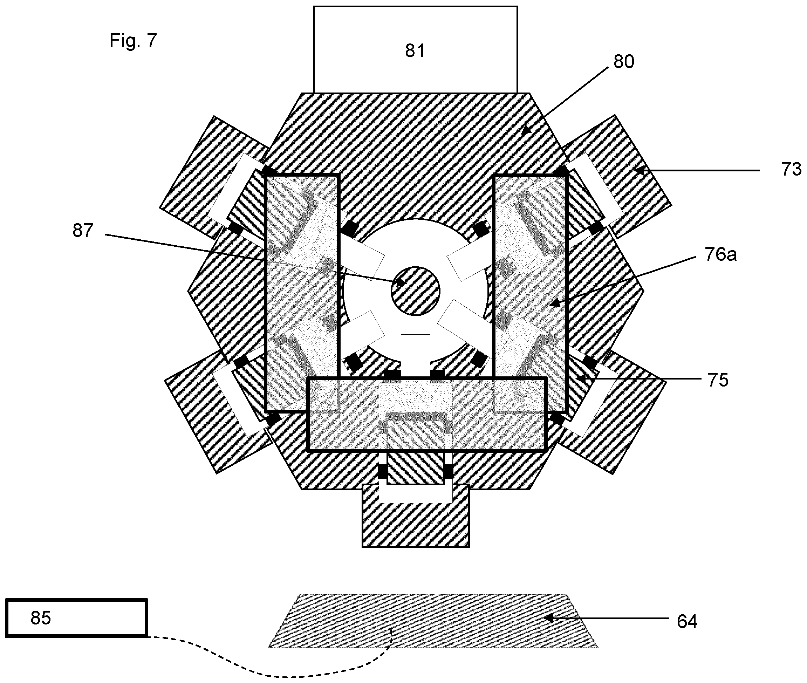

Fig. 7 zeigt eine Ventilanordnung mit einer Vielzahl von Ventileinrichtungen. Dabei sind an einer Oberseite der Ventilanordnung jeweils transparente Wandungsabschnitte des Gehäuses vorgesehen. Eine Erfassungseinrichtung 64 kann hier bevorzugt das Innenleben und insbesondere die Kolbeneinrichtungen und/oder Ventilsitze mehrerer und bevorzugt aller Ventileinrichtungen überwachen. Bevorzugt blickt die Erfassungseinrichtung hier von außerhalb der Bildebene schräg von oben auf Sichtfenster bzw. die transparenten Wandungsabschnitte.

Das Bezugszeichen 87 bezieht sich auf einen stangenartigen Körper bzw. die oben genannte Reckstange, die innerhalb der Ventilanordnung beweglich und insbesondere in einer Längsrichtung der zu expandierenden Kunststoffvorformlinge beweglich ist.

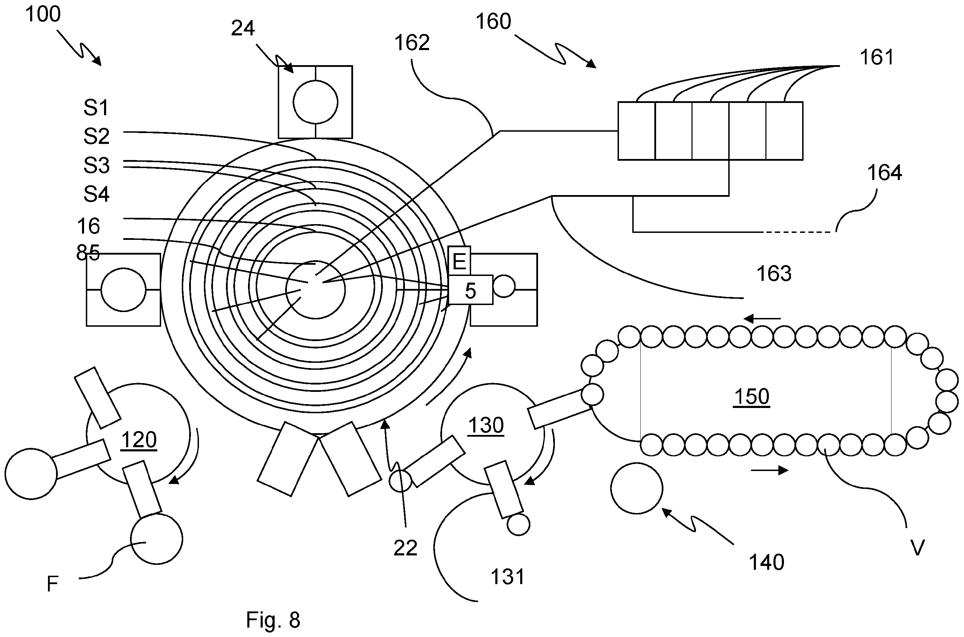

Fig. 8 zeigt eine schematische Draufsicht einer Behälterbehandlungsmaschine bzw. einer Vorrichtung zum Umformen von Kunststoffvorformlingen zu Kunststoffbehältnissen in Form einer Hohlkörperherstellungsmaschine 100 . In diesem Ausführungsbeispiel ist sie als kontinuierlich arbeitende Streckblasmaschine ausgeführt. Vorformlinge V werden über einen sogenannten Sägezahnstern 140 einer Vorrichtung zur Temperierung 150 zugeführt, in der bevorzugt die Vorformlinge V mittels auf einer umlaufenden Kette angeordneten Heizdornen durch einen nicht näher dargestellten Heiztunnel, vorteilhaft bestehend aus einer Vielzahl von Infrarotheizstrahlern und gegenüberliegenden Reflektoren, kontinuierlich durchgeführt werden.

Bei der Vorrichtung zum Temperieren 150 kann es sich alternativ um einen Rundläufer handeln, an dessen Umfang eine Vielzahl von Erwärmungsstationen wie Mikrowellenresonatoren oder Heiztaschen angebracht sind (nicht gezeigt).

Nach der Temperierung werden die Vorformlinge V von Greifern 131, welche auf einem Einlaufstern 130 umlaufen, an ein Blasrad 22 übergeben, auf dessen Umfang eine Vielzahl von Blasstationen bzw. Umformungsstationen 24 angeordnet ist.

Nach dem Formgebungsprozess in der Blasstation 24 werden die fertig geblasenen Flaschen F von einem Entnahmestern 120 entnommen. Anschließend erfolgt ein Transport der Flaschen F zu einer nicht gezeigten Etikettierung, Abfüllung und Verpackung. Die Transportwege der Vorformlinge V und der Flaschen F sind jeweils mit Pfeilen angedeutet.

Die einzelnen Umformungsstationen bzw. Blasstationen 24 werden über einen Kompressor 160 mit mehreren Kompressorstufen 161, mit einem gasförmigen Medium, hier Druckluft, versorgt. In der ersten Stufe (rechts dargestellt) wird Luft auf einen Druck von beispielsweise 5 bar komprimiert, in der nächsten Stufe auf 10 bar und so weiter, bis sie nach der Endstufe einen Druck von 45 bar aufweist.

Sodann wird die Luft über eine Zuführleitung 162 einem Drehverteiler 165 zugeführt, welcher den stationären Teil der Hohlkörperherstellungsmaschine 100 mit dem drehenden Teil (Blasrad 22) verbindet. Auf dem Drehverteiler 165 sitzen bevorzugt ebenfalls mehrere nicht dargestellte Druckminderer, welche den vom Kompressor 160 bereitgestellten Druck auf unterschiedliche Druckniveaus für ebenfalls bevorzugt auf dem Blasrad 170 angebrachte Ringleitungen S1 bis S3 reduzieren.

Die Ringleitungen S1, S2, S3 dienen als Druckspeicher und/oder -verteiler für die einzelnen Blasstationen 24 auf dem Blasrad 22. In Ringleitung S3 wird ein Vorblasdruck von beispielsweise 10 bar bereitgestellt, in Ringleitung S2 ein Zwischenblasdruck von beispielsweise 20 bar und in Ringleitung S1 ein Fertigblasdruck von beispielsweise 35 bar.

Jede Blasstation bzw. Umformungsstation 24 umfasst dabei eine Ventileinheit bzw. Ventilanordnung 80 auf, welche mit den einzelnen Ringleitungen S1, S2, S3 verbunden ist und welche die einzelnen Ringleitungen S1, S2, S3 mit dem aufzublasenden Vorformling V verbindet. Nach dem Abdichten des Vorformlings V mittels einer Blasdüse bzw. Beaufschlagungseinrichtung wird dieser nacheinander und in folgender Reihenfolge mit den einzelnen Ringkanälen verbunden: S1, S2, S3.

Nach dem fertigen Expandieren wird bevorzugt die Luft aus der Flasche F - immer noch unter dem Fertigblasdruck stehend - zuerst wieder in den Ringkanal S2 zurückgeführt, vorteilhafterweise so lang, bis der Druck in der Flasche F annähernd den Druck im Ringkanal S2 erreicht hat. Anschließend wird die Luft in der Flasche F - jetzt annähernd unter dem Druck des Ringkanals S2 stehend - dem Kanal S3 zugeführt.

Es kann auch vorteilhaft sein, zuerst den Vorblaskanal S3 für eine Rückführung der Luft zu nutzen, wenn sichergestellt werden soll, dass in diesem immer ein Mindestdruck bereitgestellt werden soll. Auch kann die Rückführzeit über den Druck in einem Kanal S2, S3, S4 mittels eines nicht dargestellten Drucksensors geregelt werden.

Auf die Druckminderer, welche bevorzugt den Druck für die Kanäle S2 und S3 zur Verfügung stellen, könnte während der Produktion auch verzichtet werden, wenn genügend Luftmenge recycelt wird, für ein Anfahren der Blasmaschine sind sie jedoch von Vorteil.

Die Erfindung kann alternativ zur Blasmaschine auch bei einem Füller (bzw. bei seinen Produktventilen, CIP-Ventilen, Gasventilen...) eingesetzt werden oder bei allen Ventilen zum Steuern von CIP-Medien oder Produkt im Prozesstechnikteil der von getränkebehandelnden Prozesstechnikkomponenten, insbesondere bei Ventilknoten.

Darunter fallen auch Scheiben-, Sitz- und Doppelsitzventile. Z.B. könnte ein Doppelsitzventil-Gehäuse Folie zumindest teilweise aus einem transparenten Material bestehen und somit die Dichtung überwacht werden.

Der genannte mobile Roboter mit Kamera / Sensor könnte auch die Ventile an Füller und Prozesstechnikventile überprüfen. Zur Kontrolle des Verschleißes wäre es ebenfalls möglich, dass der mobile Roboter die Ventile ausbaut und im ausgebauten Zustand ansieht. Die Ventile können dafür mit einem Schnellverschluss angebracht sein. Sofern sinnvoll soll auch der Inhalt des angegebenen Standes der Technik Teil der Erfindung sein.

Anstatt nun die verbleibende Luft über einen Auslass E an die Atmosphäre entweichen zu lassen, wird die Blasluft anschließend nochmals bis zu einem Niveau von 3-5 bar in den Kanal S4 zurückgespeist. Da das Vorblasen aus Kanal S3 unter einem gewissen Druck von hier 10 bar den ersten Schritt in der Herstellung des Hohlkörpers darstellen muss, dient der Ringkanal S4 aufgrund seines niedrigeren Druckniveaus in diesem Ausführungsbeispiel ausschließlich der (Zwischen-)Speicherung oder -weiterleitung von rückgeführter Blasluft aus der Flasche F und nicht zum Blasen.

Von dort aus kann die Luft entweder noch auf dem Blasrad 22, beispielsweise Vorsteuerventilen 9 oder anderen Antrieben der Blasstationen (z. B. einem Antrieb für Reckstangen), zur Verfügung gestellt werden, oder über eine weitere Leitung und durch den Drehverteiler 165 zurück in den stationären Teil der Maschine über Leitung 163 überführt werden. Von dort kann die Luft beispielsweise in eine Zwischenstufe des Kompressors 161 zurückgespeist oder über Leitung 164 dem Hallendruckluftnetz oder anderen Verwendungen wie einer Flaschenbodennachkühlung oder einer Etikettier- oder Füllmaschine zugeführt werden.

Die Ringleitungen S1, S2, S3, S4 können auch nur bereichsweise ringförmig ausgebildet sein. Beispielsweise kann ein Ringkanal S1, S2, S3, S4 auch durch zwei halbkreisförmige Hälften gebildet werden. Allgemein sollen im Folgendem die Druckspeicher mit S bezeichnet werden.

Der bereits erwähnte Auslass E ist an jeder Station Bs vorhanden und dient dem Auslass der verbleibenden 3-5 bar in der Flasche F, bevor die Blasdüse 8 wieder hochgefahren und die Flasche F entnommen wird.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (100) zum Umformen von Kunststoffvorformligen (V) zu Kunststoffbehältnissen (F) mit einem vorzugsweise beweglichen Träger (22), an dem eine Vielzahl von Umformungsstationen (24) zum Umformen der Kunststoffvorformlinge (V) zu den Kunststoffbehältnissen (F) angeordnet ist, wobei diese Umformungsstationen (24) jeweils Ventilanordnungen (80) aufweisen, um die Kunststoffvorformlinge (V) zu deren Expansion mit einen fließfähigen und insbesondere gasförmigen Medium zu beaufschlagen und wobei jede dieser Ventilanordnungen (80) wenigstens zwei steuerbare Ventileinrichtungen (60) aufweist, wobei diese Ventileinrichtungen (60) bewegliche Kolbeneinrichtungen (75) aufweisen, welche die Ventileinrichtungen (60) zwischen wenigstens zwei Ventilstellungen schalten können,
**dadurch gekennzeichnet, dass**
die Vorrichtung eine Überwachungseinrichtung zur Überprüfung eines Verschleißzustandes wenigstens einer der Ventileinrichtungen (60) aufweist, wobei diese Überwachungseinrichtung wenigstens eine Erfassungseinrichtung (64) aufweist, welche dazu geeignet und bestimmt ist, den Verschleißzustand der Ventileinrichtung (60), mittels elektromagnetischer Strahlung und/oder akustisch und berührungslos zu erfassen.

2. Vorrichtung (1) nach Anspruch 1,
**dadurch gekennzeichnet, dass**
die Erfassungseinrichtung dazu geeignet ist, ein ortsaufgelöstes Bild wenigstens eines Bestandteils einer Ventileinrichtung aufzunehmen.

3. Vorrichtung (1) nach Anspruch 1,
**dadurch gekennzeichnet, dass**
wenigstens eine Ventileinrichtung (60) ein Gehäuse (76) aufweist, innerhalb dessen die Kolbeneinrichtung beweglich ist und die Erfassungseinrichtung dazu geeignet und bestimmt ist, den Verschleißzustand der Ventileinrichtung durch eine Wandung dieses Gehäuses hindurch zu erfassen oder die Erfassungseinrichtung in dieses Gehäuse und insbesondere in eine Wandung dieses Gehäuses integriert ist.

4. Vorrichtung (1) nach dem vorangegangenen Anspruch,
**dadurch gekennzeichnet, dass**
die Erfassungseinrichtung (64) eine Bildaufnahmeeinrichtung ist oder aufweist.

5. Vorrichtung (1) nach wenigstens einem der vorangegangenen Ansprüche,
**dadurch gekennzeichnet, dass**
das Gehäuse (66) wenigstens einen für Licht, insbesondere für sichtbares Licht, transparenten Wandungsabschnitt (68) aufweist und bevorzugt die Erfassungseinrichtung dazu geeignet und bestimmt ist, den Verschleißzustand der Ventileinrichtung durch diesen transparenten Wandungsabschnitt zu beobachten.

6. Vorrichtung (1) nach wenigstens einem der vorangegangenen Ansprüche,
**dadurch gekennzeichnet, dass**
die Erfassungseinrichtung (64) dazu geeignet und bestimmt ist, einen Verschleißzustand des Ventilkolbens zu erfassen.

7. Vorrichtung (1) nach wenigstens einem der vorangegangenen Ansprüche,
**dadurch gekennzeichnet, dass**
die Vorrichtung (1) eine Steuerungseinrichtung aufweist, welche dazu geeignet und bestimmt ist, die Vorrichtung (1) auf Basis wenigstens eines von der Erfassungseinrichtung ausgegebenen Wertes zu steuern und/oder die Vorrichtung wenigstens eine Prozessoreinrichtung aufweist, welche dazu geeignet und bestimmt ist, wenigstens einen von der Erfassungseinrichtung ausgegebenen Wert auszuwerten und ein Signal auszugeben welches für einen Verschleißzustand der Ventileinrichtung charakteristisch ist.

8. Vorrichtung (1) nach wenigstens einem der vorangegangenen Ansprüche,
**dadurch gekennzeichnet, dass**
die Erfassungseinrichtung stationär gegenüber der Ventileinrichtung angeordnet ist, oder die Erfassungseinrichtung relativbeweglich gegenüber der Ventileinrichtung angeordnet ist.

9. Ventileinrichtung (60), insbesondere für eine Vorrichtung nach wenigstens einem der vorangegangenen Ansprüche, wobei diese Ventileinrichtung einen Medieneingang (72) für ein fließfähiges Medium und einen Medienausgang (74) für das fließfähige Medium aufweist und eine linearbewegliche Kolbeneinrichtung, welche zwischen wenigstens zwei Stellungen der Ventileinrichtung beweglich ist, wobei in einer der beiden Stellungen ein Medienfluss des fließfähigen Mediums von dem Medieneingang (72) zu dem Medienausgang (74) ermöglicht ist und in der anderen der beiden Stellungen ein Medienfluss des fließfähigen Mediums von dem Medieneingang (72) zu dem Medienausgang (74) verhindert ist und mit einem Gehäuse (76) , innerhalb dessen die Kolbeneinrichtung (75) beweglich ist,
**dadurch gekennzeichnet, dass**
wenigstens ein Abschnitt der Kolbeneinrichtung (75) und/oder eines Ventilsitzes mittels einer optischen Erfassungseinrichtung (64) durch einen Bereich des Gehäuses (80) hindurch beobachtbar ist.

10. Ventileinrichtung (60) nach dem vorangegangenen Anspruch,
**dadurch gekennzeichnet, dass**
das Gehäuse wenigstens einen transparenten Gehäuseabschnitt aufweist, durch welchen hindurch der Abschnitt der Kolbeneinrichtung und/oder eines Ventilsitzes beobachtbar ist und/oder das Gehäuse eine Ausnehmung aufweist, in welche die Erfassungseinrichtung einsetzbar ist.

11. Ventileinrichtung (60) nach wenigstens einem der vorangegangenen Ansprüche,
**dadurch gekennzeichnet, dass**
die Ventileinrichtung eine pneumatisch oder elektrisch gesteuerte Ventileinrichtung ist.

12. Überwachungsvorrichtung zur Überwachung eines Verschleißzustandes einer Ventileinrichtung mit einer Ventileinrichtung nach einem der vorangegangenen Ansprüche 10 - 11 und mit einer Erfassungseinrichtung (64), welche dazu geeignet ist, wenigstens einen Verschleißzustand der Kolbeneinrichtung und/oder des Ventilsitzes zu erfassen, wobei bevorzugt die Erfassungseinrichtung dazu geeignet und bestimmt ist, ein ortsaufgelöstes Bild der Kolbeneinrichtung und/oder des Ventilsitzes aufzunehmen.

13. Verfahren zum Umformen von Kunststoffvorformligen (V) zu Kunststoffbehältnissen (F) wobei ein beweglicher Träger (22), an dem eine Vielzahl von Umformungsstationen (24) zum Umformen der Kunststoffvorformlinge zu den Kunststoffbehältnissen (15) angeordnet ist diese Kunststoffvorformlinge transportiert, wobei diese Umformungsstationen (24) jeweils Ventilanordnungen (80) aufweisen, mittels derer die Kunststoffvorformlinge (V) zu deren Expansion mit einen fließfähigen und insbesondere gasförmigen Medium beaufschlagt werden und wobei jede dieser Ventilanordnungen (80) wenigstens zwei steuerbare Ventileinrichtungen (60) aufweist, wobei diese Ventileinrichtungen (60) bewegliche Kolbeneinrichtungen haben, welche die Ventileinrichtungen zwischen wenigstens zwei Ventilstellungen schalten,
**dadurch gekennzeichnet, dass**
eine Überwachungseinrichtung zur Überprüfung eines Verschleißzustandes wenigstens einer der Ventileinrichtungen vorgesehen ist, wobei diese Überwachungseinrichtung wenigstens eine Erfassungseinrichtung (64) aufweist, welche wenigstens ein Element der Ventileinrichtung optisch erfasst, um den Verschleißzustand der Ventileinrichtung optisch und berührungslos zu erfassen und/oder zu ermitteln.

14. Verfahren zum Überwachen, insbesondere eines Verschleißzustandes, einer Ventileinrichtung (60) einer Umformungsstation (24) mit den folgenden Schritten:
- Schalten der Ventileinrichtung (60) zur Freigabe eines unter Druck stehenden Mediums;
- Umformen von Kunststoffvorformlingen (V) zu Kunststoffbehältnissen (F) unter Zuhilfenahme des Mediums;
- Erfassen eines Bereichs der Ventileinrichtung (60) mit einer Erfassungseinrichtung (64);
- Aufnehmen und Speichern von Bilddaten mit der Erfassungseinrichtung (64)
- Generieren eines digitalen Bildes mit den Bilddaten;
- Analysieren des Bildes oder der Bilddaten mit einer Auswerteeinrichtung;
- optional Einleiten von Maßnahmen bei der Feststellung eines Fehlers.
